# EUROPEAN PATENT APPLICATION

(11) **EP 2 479 931 A1**
(43) Date of publication of application: **25.07.2012**
(21) Application number: 10816694.3
(22) Date of filing: 15.09.2010
(51) Int. Cl.: H04L 12/28

(54) **METHOD AND SYSTEM FOR PAN-TILT-ZOOM CONTROL**

(30) Priority: 15.09.2009 CN 200910190069
(71) Applicant: ZTE Corporation, Shenzhen, Guangdong 518057 (CN)
(72) Inventor: MA, Xiaofei, Shenzhen Guangdong 518057 (CN)
(74) Representative: Pons Ariño, Angel
(86) International application number: PCT/CN2010/076927
(87) International publication number: WO 2011/032490

(57) **Abstract**

A method and system for pan-tilt-zoom control are provided. The method includes that: a threshold of a pan-tilt-zoom control mode is preset in a monitor center client, wherein the pan-tilt-zoom control mode is comprised of interlocking and inching; according to the result compared between the time for starting the pan-tilt-zoom control and the threshold, the monitor center client sends an order of interlocking or inching of the pan-tilt-zoom control mode to the pan-tilt-zoom. A user can preset the different thresholds in the monitor center client of a pan-tilt-zoom control system to configure the pan-tilt-zoom control mode, according to behaviors of the user, the corresponding pan-tilt-zoom control mode to be used is determined, the individualized settings of the user can be satisfied maximally, and the advantages of interlocking and inching are both got. So a camera is easy to be positioned in an expecting angular position and the efficiency is improved.

## Description

### Field of the Invention

The present invention relates to the digital video monitor technology, in particular to a Pan-Tilt-Zoom (PTZ) control method and system.

### Background of the Invention

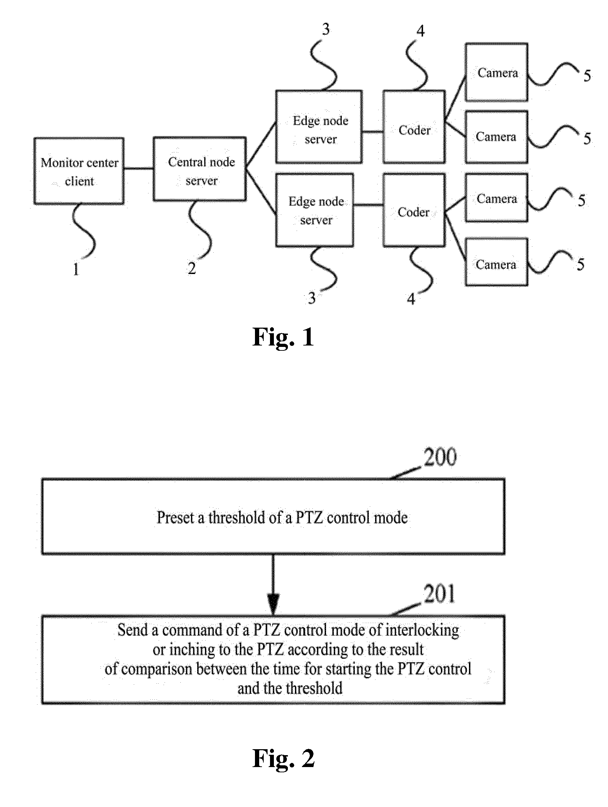

Fig. 1 shows a structure diagram of the existing digital video monitor system, as shown in Fig. 1, which comprises a monitor center client 1, a central node server 2, an edge node server 3, a coder 4 and a camera 5. In this case, the monitor center client 1 passes the authentication of the central node server 2, finds its own domain, establishes connection with the edge node server 3 of the domain to which the central node server 2 belongs, and then obtains the coder 4 to which it belongs. And the coder 4 is connected with the camera 5. In this way, the digital video monitor system is connected to perform a monitoring function. The camera 5 is generally arranged on a PTZ, the PTZ is remotely controlled by the monitor center client 1, and the camera 5 is driven by the PTZ to move.

In a present digital video monitor system, PTZ control modes include the two modes of interlocking and inching. In this case, interlocking means that the monitor center client sends an interlocking message to the PTZ, the PTZ controls the camera to always turn in a certain speed till the monitor center sends a stop message to the PTZ, and then the PTZ controls the camera to stop turning. In such a PTZ control mode of interlocking, when the camera turns to a desired angle, the monitor center client sends a stop message. After the PTZ receives and processes the stop message, the camera has turned to another angle. Therefore, it is difficult for the PTZ control mode of interlocking to position the camera in the desired angle.

Inching means that when the monitor center client sends an inching message to the PTZ, the PTZ controls the camera to turn in a certain step and then automatically stops. In such PTZ control mode of inching, the camera can turn only a certain angle at each time. If the PTZ is needed to be positioned at a desired angle, then it needs to be operated patiently and repeatedly. Therefore, it is also quite inconvenient for the PTZ control mode of inching to position the camera to a desired angle.

At present, in a same digital video monitor system, the PTZ control mode is either interlocking or inching. The user can only use one of the two control modes and cannot change at any moment. Therefore, the existing PTZ control system is unable to satisfy the customized demands of users.

### Summary of the Invention

The present invention provides an intelligent PTZ control method and system with customized settings, which can improve the efficiency in positioning a camera.

The technical solution provided in the present invention is: a PTZ control method, comprising the following steps:
presetting a threshold of a PTZ control mode in a monitor center client, wherein the PTZ control mode includes interlocking and inching; and
sending, by the monitor center client, a command of a PTZ control mode of interlocking or inching to the PTZ according to the result of comparison between the time for starting the PTZ control and the threshold.

Sending a command of a PTZ control mode of interlocking or inching to the PTZ comprises:
if the result of comparison is that the time for starting the PTZ control exceeds the threshold, the monitor center client sending a PTZ control command of interlocking to the PTZ; and
if the result of comparison is that the time for starting the PTZ control is within the threshold, the monitor center client sending a PTZ control command of inching to the PTZ.

After sending a PTZ control command of interlocking to the PTZ, the method further comprises:
when the PTZ control is cancelled, the monitor center client sending a stop command to the PTZ.

Sending a command of a PTZ control mode of interlocking or inching to the PTZ specifically comprises:
after the PTZ control is started, establishing cancel of the PTZ control within the time of the threshold as an event object, and initializing the event object to a non-signaled state, so that the monitor center client sends a corresponding PTZ control command to the PTZ according to whether the event object occurs.

The method further comprises: after the PTZ control is started, establishing a thread, and monitoring the event object through the thread.

A PTZ control system, comprising a monitor center client and a PTZ, wherein,
the monitor center client is configured to control the PTZ through control modes of interlocking and inching, the monitor center client comprises:
a threshold setting unit, configured to preset a threshold of a PTZ control mode;
an operation processing unit, configured to compare the time when a PTZ control button is pressed down with the threshold, and to output the result of comparison to a command sending unit; and
the command sending unit, configured to send a command of a PTZ control mode of interlocking or inching to the PTZ according to the result of comparison.

The command sending unit is specifically configured to send a PTZ control command of interlocking to the PTZ when the time for starting the PTZ control exceeds the threshold; or, send a PTZ control command of inching to the PTZ when the time for starting the PTZ control is within the threshold.

The command sending unit is further configured to, after sending a PTZ control command of interlocking, when the PTZ control is cancelled, send a stop command to the PTZ.

The operation processing unit is specifically configured to establish cancel of the PTZ control within the threshold as an event object, after the PTZ control is started, and to initialize the event object to a non-signaled state; and the command sending unit is further configured to send a corresponding PTZ control command to the PTZ according to whether the event object occurs.

The operation processing unit is further configured to establish the thread and monitor the event object through the thread, after the PTZ control is started.

The present invention has the following beneficial effects: the PTZ control method is realized by the PTZ control system, the user presets different thresholds in the monitor center client to configure the PTZ control mode, and the corresponding PTZ control mode to be used is determined according to behaviors of the user. Therefore, the customized settings of the user are satisfied maximally, and advantages of both interlocking and inching are obtained. For example, the camera can be first moved to a position with a certain distance from the desired angle by sending a PTZ control mode of interlocking and then stopped, and then the PTZ is moved to the desired angle by sending a PTZ control mode of inching. In this way, it is easy to position the camera to the desired angle, and the efficiency in positioning a camera is improved.

### Brief Description of the Drawings

Fig. 1 shows a structure diagram of the existing digital video monitor system;
Fig. 2 shows a flow diagram of a PTZ control method according to the present invention;
Fig. 3 shows a specific flow chart of a PTZ control method according to one embodiment of the present invention; and
Fig. 4 shows the structure diagram of a PTZ control system according to one embodiment of the present invention.

### Detailed Description of the Embodiments

As shown in Fig. 2, the PTZ control method in the present invention comprises the following steps.

Step200: A threshold of a PTZ control mode is preset in a monitor center client, wherein the PTZ control mode includes interlocking and inching;

Step201: According to the result of comparison between the time for starting the PTZ control (for example, pressing down the button) and the threshold, the monitor center client sends a command of a PTZ control mode of interlocking or inching to the PTZ.

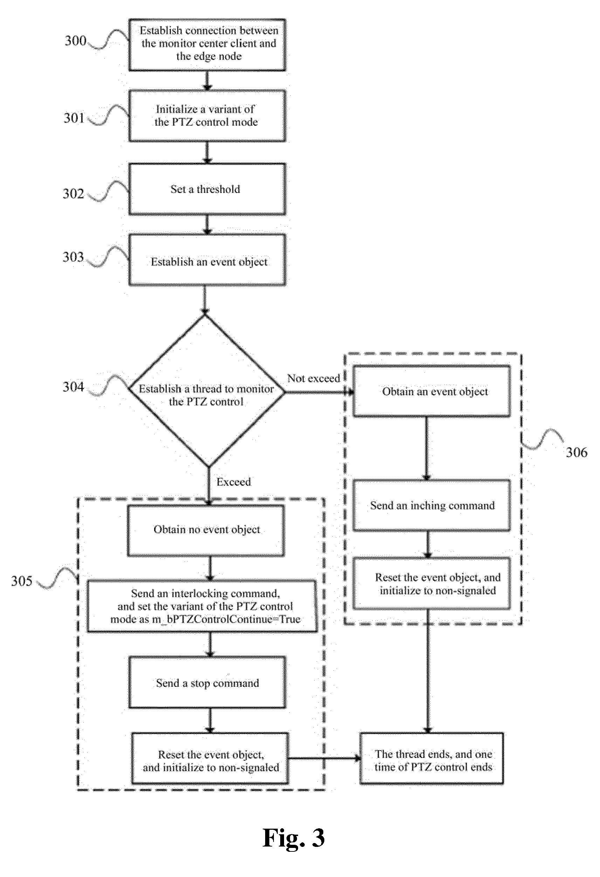

The specific implementation of the PTZ control method in the present invention will be described in details hereinafter. As shown in Fig. 3, it comprises the following processes.

Step300: The connection between the monitor center client and the edge node is established. The user starts the monitor center client and logs on successfully, and the monitor center client passes the authentication of the central node server, finds its own domain, and then establishes connection with the edge node of the domain to which the central node server belongs, and obtains the coder to which it belongs.

Step301: Initialize the variant of the PTZ control mode. In the monitor center client, a variant m_bPTZControlContinue is set for the PTZ control mode. The value of the variant may be false or true. When the value is False, it represents one of the two PTZ control modes of interlocking and inching, and when the value is True, it represents the other one of the PTZ control modes of interlocking and inching. In the embodiment, the variant of the PZT control mode is initialized to m_bPTZControlContinue=False, and the PTZ control mode is inching as default.

Step302: A threshold is set. According to demands of the user, in the monitor center client, a threshold R of the PTZ control mode is set. The threshold R is a reference cut-point for comparison between the time for pressing down the PTZ control button and the threshold, so that the monitor center client sends a corresponding PTZ control mode command to the PTZ according to the result of comparison.

Step303: An event object is established. The popup of the PTZ control button within the threshold after the PTZ control button is pressed down is established as an event object, and the event object is initialized to a non-signaled state. When the event occurs, the monitor center client sends a PTZ control command of inching. Otherwise, when the event does not occur, that is, the PTZ control button does not pop up within the threshold, the monitor center client sends a PTZ control command of interlocking to the PTZ. In this case, popup means the popup of the PTZ control button, that is, the PTZ control is cancelled.

Step304: A thread is established to monitor the PTZ control. The PTZ control button is pressed down, a thread is established, and the event object is monitored and waited for through the thread.

Step305: No event object is obtained. After Step304, after the PTZ control button is pressed down, it does not pop up within the threshold. In this case, the monitoring center sends a PTZ control command of interlocking to the PTZ and resets the variant of the PTZ control mode as m_bPTZControlContinue=True. It represents that it is to be used for sending a stop command to the PTZ when the PTZ control button pops up after the PTZ control command of interlocking is sent. In this case, when the PTZ control button pops up, the monitor center client sends a stop command to the PTZ, resets the variant of the PTZ control mode as m_bPTZControlContinue=False, and resets the event object as non-signaled state, namely, initial status. The thread ends.

Step306: An event object is obtained. After Step304, after the PTZ control button is pressed down, it pops up within the threshold, that is, the event occurs and it is in a signaled state. In this case, the monitor center client sends a PTZ control command of inching to the PTZ, resets the variant of the PTZ control mode as m_bPTZControlContinue=False, and resets the event object as non-signaled state, namely, initial status. The thread ends.

It should be noted that Step302 to Step306 may be repeated, and the threshold may be reset according to behaviors of the user for intelligent PTZ control.

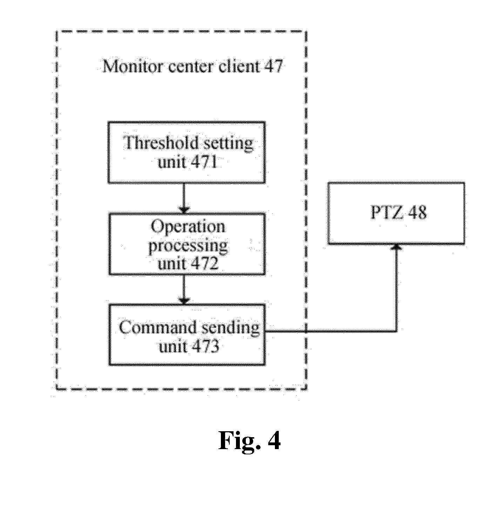

The PTZ control method in the present invention is realized by the PTZ control system as shown in Fig. 4. As shown in Fig. 4, the PTZ control system comprises a monitor center client 47 and a PTZ 48, and the monitor center client 47 controls the PTZ 48 by the control modes of interlocking and inching.

As shown in Fig. 4, the monitor center client 47 comprises a threshold setting unit 471, an operation processing unit 472 and a command sending unit 473, wherein
the threshold setting unit 471 is configured to preset a threshold of a PTZ control mode;
the operation processing unit 472 is configured to compare the time when a PTZ control button is pressed down with the threshold preset by the threshold setting unit 471, and output the result of comparison to a command sending unit 473; and
the command sending unit 473 is configured to send a command of a PTZ control mode of interlocking or inching to the PTZ 48 according to the result of comparison; specifically: if the time for pressing down the PTZ control button exceeds the threshold, the command sending unit 473 sends a PTZ control command of interlocking to the PTZ 48, and sends a stop command to the PTZ 48 till the PTZ control button pops up again; and if the time for pressing down the PTZ control button is within the threshold, the command sending unit 473 sends a PTZ control command of inching to the PTZ 48.

The working principle of the PTZ control system shown in Fig. 4 is as follows: the operation processing unit 472 is further configured to establish the popup within the threshold after the PTZ control button is pressed down as an event object, and initialize the event object to a non-signaled state; and the command sending unit 473 sends a corresponding PTZ control command to the PTZ 48 according to whether the event object occurs. After the PTZ control button is pressed down, the operation processing unit 472 establishes a thread and monitors the event object through the thread. If the PTZ control button does not pop up within the threshold, the command sending unit 473 will send a PTZ control command of inching to the PTZ 48; if the threshold is exceeded, the command sending unit 473 will send a PTZ control command of interlocking to the PTZ 48, and send a stop command to the PTZ 48 till the mouse pops up.

In the present invention, the PTZ control method is realized by the PTZ control system, the PTZ control method is realized by the PTZ control system, the user presets different thresholds in the monitor center client to configure the PTZ control mode, and the corresponding PTZ control mode to be used is determined according to behaviors of the user. Therefore, the customized settings of the user are satisfied maximally, and advantages of both interlocking and inching are obtained. For example, the camera can be first moved to a position with a certain distance from the desired angle by sending a PTZ control mode of interlocking and then stopped, and then the PTZ is moved to the desired angle by sending a PTZ control mode of inching. In this way, it is easy to position the camera to the desired angle, and the efficiency in positioning a camera is improved.

Above contents are provided for further detailed descriptions of the present invention in conjunction with specific embodiments. The specific implementations of the present invention should not be considered as to be limited to these descriptions. For ordinary persons skilled in the art, the present invention may have various simple modifications or replacements within the concept of the present invention, and these modifications or replacements should be included within the protection scope of the present invention.

## Claims

1. A Pan-Tilt-Zoom (PTZ) control method, **characterized by** comprising the steps of:
presetting a threshold of a PTZ control mode in a monitor center client, wherein the PTZ control mode includes interlocking and inching; and
sending, by the monitor center client, a command of the PTZ control mode of interlocking or inching to the PTZ according to a result of comparison between a time for starting the PTZ control and the threshold.

2. The PTZ control method according to claim 1, **characterized in that** sending the command of the PTZ control mode of interlocking or inching to the PTZ comprises:
if the result of comparison is that the time for starting the PTZ control exceeds the threshold, the monitor center client sending the PTZ control command of interlocking to the PTZ;
if the result of comparison is that the time for starting the PTZ control is within the threshold, the monitor center client sending the PTZ control command of inching to the PTZ.

3. The PTZ control method according to claim 2, **characterized in that**, after sending the PTZ control command of interlocking to the PTZ, the method further comprises:
when the PTZ control is cancelled, the monitor center client sending a stop command to the PTZ.

4. The PTZ control method according to claim 1, **characterized in that** sending the command of the PTZ control mode of interlocking or inching to the PTZ specifically comprises:
after the PTZ control is started, establishing cancel of the PTZ control within the time of the threshold as an event object, and initializing the event object to a non-signaled state, so that the monitor center client sends a corresponding PTZ control command to the PTZ according to whether the event object occurs.

5. The PTZ control method according to claim 4, **characterized in that** the method further comprises: after the PTZ control is started, establishing a thread, and monitoring the event object through the thread

6. A Pan-Tilt-Zoom (PTZ) control system, **characterized by** comprising a monitor center client and a PTZ, wherein
the monitor center client, configured to control the PTZ through control modes of interlocking and inching, and the monitor center client comprises:
a threshold setting unit, configured to preset a threshold of the PTZ control mode;
an operation processing unit, configured to compare a time when a PTZ control button is pressed down with the threshold, and output the result of comparison to a command sending unit; and
the command sending unit, configured to send a command of the PTZ control mode of interlocking or inching to the PTZ according to the result of comparison.

7. The PTZ control system according to claim 6, **characterized in that** the command sending unit is specifically configured to send the PTZ control command of interlocking to the PTZ when a time for starting the PTZ control exceeds the threshold, or send the PTZ control command of inching to the PTZ when the time for starting the PTZ control is within the threshold.

8. The PTZ control system according to claim 7, **characterized in that** the command sending unit is further configured to, after sending the PTZ control command of interlocking, when the PTZ control is cancelled, send a stop command to the PTZ.

9. The PTZ control system according to any one of claims 6-8, **characterized in that** the operation processing unit is specifically configured to establish cancel of the PTZ control within the threshold as an event object, after the PTZ control is started, and to initialize the event object to a non-signaled state; and the command sending unit is further configured to send a corresponding PTZ control command to the PTZ according to whether the event object occurs.

10. The PTZ control system according to claim 9, **characterized in that** the operation processing unit is further configured to establish a thread and monitor the event object through the thread, after the PTZ control is started.
